Europäisches Patentamt

(19) European Patent Office

Office européen des brevets

(11) Veröffentlichungsnummer: **0 006 225**
A1

(12) **EUROPÄISCHE PATENTANMELDUNG**

(21) Anmeldenummer: 79101930.0

(22) Anmeldetag: 13.06.79

(51) Int. Cl.³: **B 60 P 1/44**

(30) Priorität: 14.06.78 AT 4319/78
22.06.78 AT 4536/78
09.08.78 AT 5779/78
30.11.78 AT 8552/78

(43) Veröffentlichungstag der Anmeldung: 09.01.80
Patentblatt 80/1

(84) Benannte Vertragsstaaten: BE CH DE NL SE

(71) Anmelder: Vereinigte Metallwerke Ranshofen-Berndorf AG, Wohllebengasse 9, A-1041 Wien IV (AT)

(72) Erfinder: Hrachowitz, Franz, Dipl.-Ing.,
Elisenstrasse 35, A-1236 Wien (AT)

(74) Vertreter: Hain, Leonhard, Dipl.-Ing., Tal 18/IV, D-8000
München 2 (DE)

(54) Hubeinrichtung.

(57) Einrichtung zum Verschwenken einer als Ladeplatt-form (1) ausgebildeten Ladebordwand eines Fahrzeuges von der Verschlussstellung der Bordwand bis zur Last-aufnahmestellung auf dem Boden und umgekehrt. Die Hubeinrichtung besteht aus den die Ladeplattform (1) mit dem Fahrzeugchassis (5) verbindenden Gelenkvierecken (2, 3, 7) sowie aus dem zur Betätigung der Hubeinrichtung vorgesehenen Druckzylinder (9). Damit für die Schwenk-bewegungen der Ladeplattform (1) nur ein Druckzylinder (9) bzw. eine elektromechanische Betätigungsvorrichtung erforderlich ist, sind die fahrzeugseitigen Lagerstellen (17) der Lenkerarme (3) der Gelenkvierecke verschiebbar oder verschwenkbar ausgebildet.

EP 0 006 225 A1

ACTORUM AG

## Hubeinrichtung.

Die vorliegende Erfindung betrifft eine Hubeinrichtung insbesondere zum Laden von Fahrzeugen mit einer über ein elektromechanisch oder hydraulisch-pneumatisch betätigtes Gelenkviereck bewegbaren Lastaufnahmevorrichtung, insbesondere Platte.

Bekannte Ladebordwände bestehen aus einer Ladeplattform und einer am Fahrzeug befestigten Hubeinrichtung, welche in der Regel mit zwei oder vier hydraulischen Zylindern arbeitet, wobei die größeren die Hubbewegung hervorrufen, während die anderen kleineren die Verschwenkung der Ladeplattform bewirken. Eine solche Verschwenkung ist sowohl notwendig für das Anliegen am Boden zur Aufnahme der Last, als auch in der senkrecht aufgeklappten Stellung für den Abschluß der Bordwand. Diese Mechanismen sind jedoch schwer und kostspielig, bedürfen einer komplizierten Steuerung und sind daher für kleine leichte Fahrzeuge nicht geeignet.

Erfindungsgemäß werden diese Nachteile dadurch vermieden, daß die fahrzeugseitigen Lagerstellen der Lenkerarme der Gelenkvierecke für die Schwenkbewegung der Platte verschiebbar oder verschwenkbar ausgebildet sind. Dadurch ist es nämlich möglich, mit einem einzigen Hubzylinder auszukommen.

Der Gegenstand der Erfindung ist in der Zeichnung beispielsweise dargestellt.

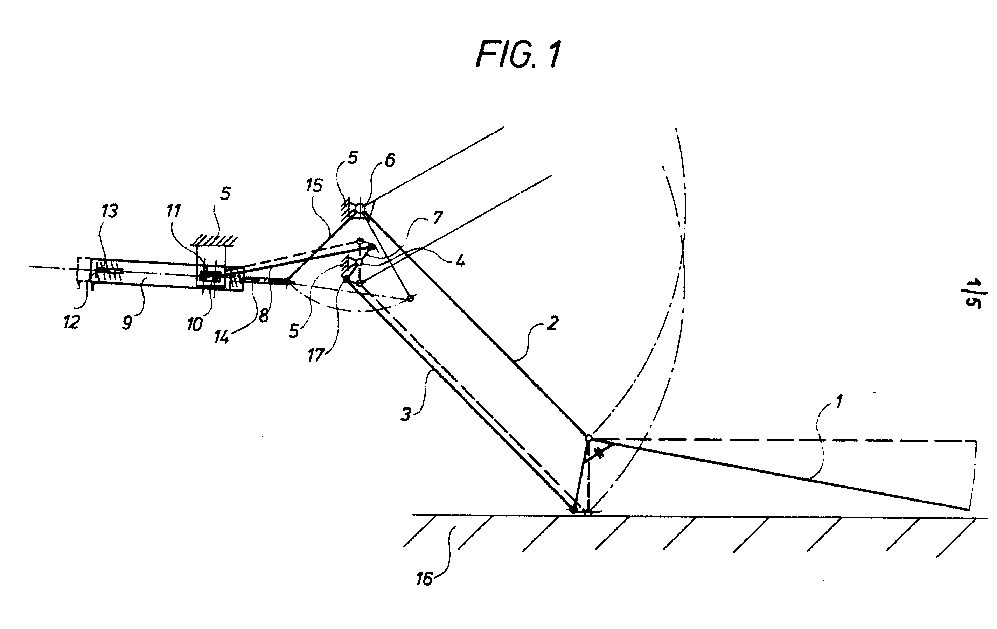

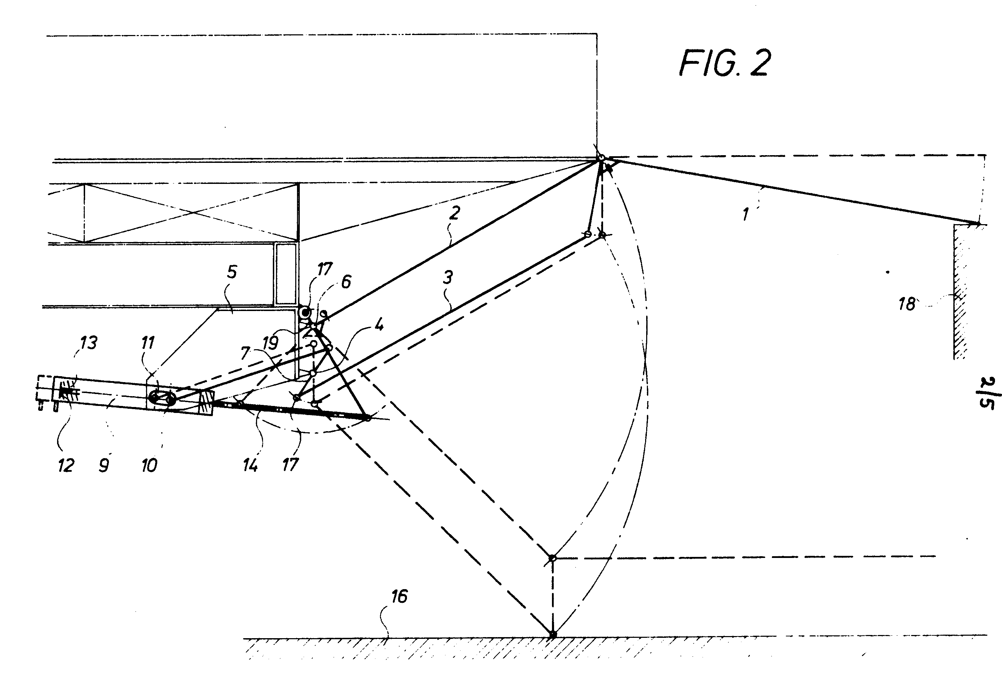

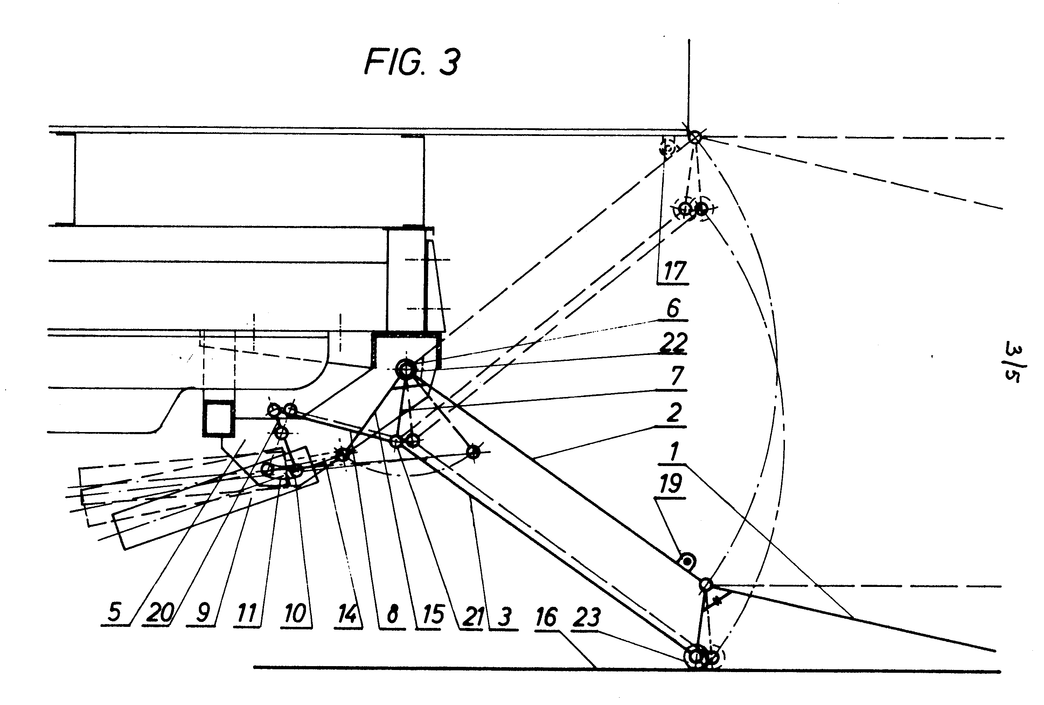

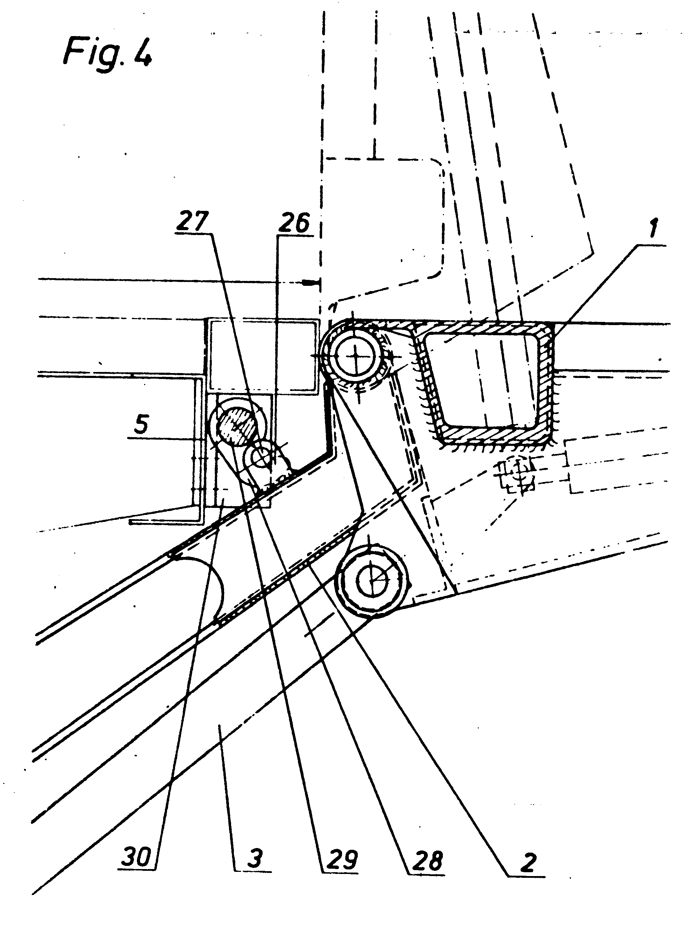

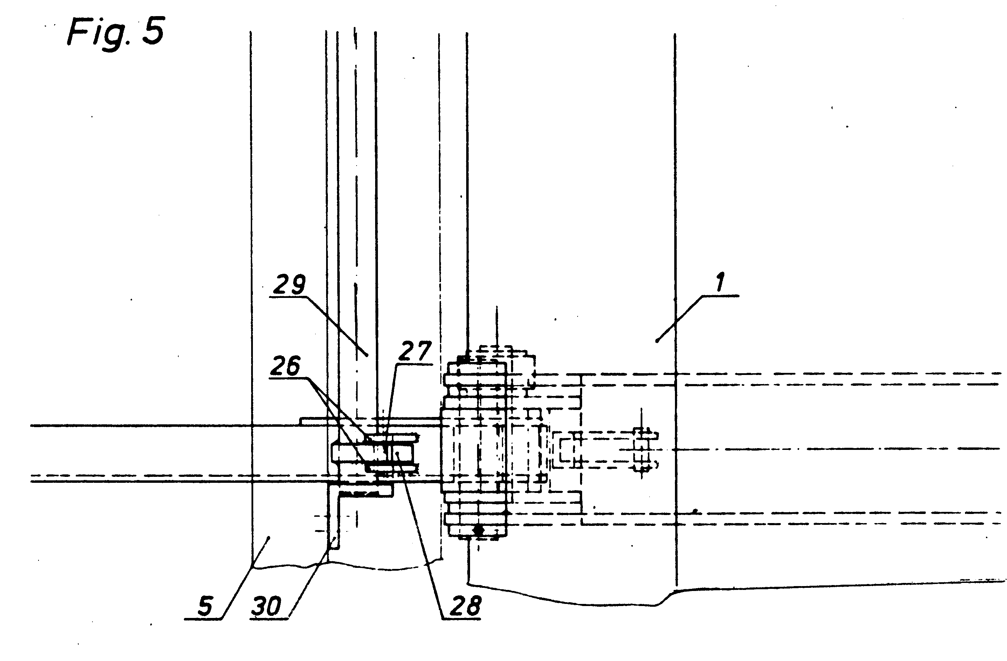

Darin zeigt Fig.1 schematisch die kinematischen Elemente der Hubeinrichtung, Fig.2 eine abgeänderte Ausführungsform am Ende eines Fahrzeuges in oberer und unterer Ladestellung, während die Fig.3 eine andere abgeänderte Ausführungsform darstellt. In den Fig.4 und 5 wird eine Arretiervorrichtung veranschaulicht, wobei Fig.4 den Querschnitt am fahrzeugseitigen Ende der Ladebordwand in oberer Ladestellung veranschaulicht, während Fig.5 eine Draufsicht dieses Details darstellt.

Wie man aus der Zeichnung erkennen kann, ist die Ladeplattform oder Lastaufnahmeeinrichtung in abgesenkter, am Boden 16 aufliegender Stellung dargestellt. Die Verbindung der Ladeplattform 1 mit dem Chassis 5 des Wagens erfolgt über ein Gelenkviereck, dessen tragende Seiten der Hubarm 2 und der Lenkerarm 3 sind. Während der Hubarm 2 am Chassis 5 bei 6 schwenkbar gelagert ist, ist der Lenkerarm 3 an einen zweiarmigen Hebel 4 bei 17 angeschlossen, der ebenfalls am Chassis bei 7 schwenkbar gelagert ist. Dieser Hebel 4 ist über eine Stange 8 mit dem Lagerbolzen 10 des Antriebszylinders 9 verbunden und daher bei Verschiebung desselben verschwenkbar. Dadurch verschwenkt sich aber der Anlenkpunkt 17, wodurch die Ladeplattform 1 von der ausgezogen gezeichneten Stellung in die strichliert gezeichnete Stellung verschwenkbar ist. Den Antrieb bildet ein hydraulischer Zylinder 9, dessen Kolben 14 am Hebelarm 15 des Hubarmes 2 angreift und die Ladeplattform 1 vom Boden 16 in die Höhe der nichtdargestellten Pritsche befördert. Die Betätigung des Lenkerarmes zur Verschwenkung der Ladeplattform in die abgesenkte Stellung gemäß Zeichnung erfolgt automatisch dadurch, daß der Lagerbolzen 10 des Zylinders 9 in einem Langloch 11 des Chassis 5 geführt ist, wodurch er mit dem gesamten Zylinder 9 bei Betätigung der Hydraulik verschoben werden kann. Die Bewegung wird außer durch das Eigengewicht der Ladeplattform 1 auch durch eine Feder 13, welche den Kolben 12 des Zylinders 9 in die abgesenkte Stellung drückt, gesteuert. Bei Anheben der Ladeplattform 1 wird zuerst durch den hydraulischen Druck auf den Kolben 12 die Feder 13 gespannt, durch die Reaktionskraft des Gewichtes der Bolzen 10 im Langloch nach vorne verschoben und sodann die Hubbewegung des Hubarmes über die Kolbenstange 14, den Hebel 15 und den Hubarm 2 bewirkt. Ist die Ladeplattform in ihrer oberen Lage in Höhe der Pritsche angelangt und nach Abschieben der Last von ihrem Gewicht befreit, kann sie leicht händisch in die vertikale Verschlußlage aufgeklappt und mit den Nachbarbordwänden verriegelt werden. Zu diesem Zweck kann sie entweder vom Lenkerarm 3 abgekoppelt oder aber durch einen auf Druck funktionierenden Anschlag oder teleskopische Ausbildung in dieser einen Richtung beweglich gemacht werden, d.h. daß sie zwischen der vertikalen und horizontalen Stellung frei klappbar ist, hingegen bei Unterschreiten der horizontalen Lage über den Lenkerarm kraftschlüssig mit der Antriebseinheit verbunden ist.

Die Erfindung ist auf das dargestellte Ausführungsbeispiel nicht beschränkt. An Stelle des Zylinders kann auch eine elektromechanische Spindelbetätigung eingebaut werden und anstelle des Hebels 4 eine Schiebekulisse.

Soll nun die Ladebordwand 1 in ihrer obersten Stellung als Auffahrrampe von einer tiefer gelegenen Laderampe 18 verwendet werden (Fig.2), so muß die Ladebordwand 1 von ihrer strichliert gezeichneten obersten horizontalen Stellung in die ausgezogen gezeichnete schräge Stellung abgesenkt werden. Diese Absenkbewegung wird nun dadurch bewirkt, daß bei blockiertem Hubarm 2 in seiner obersten Stellung die Hydraulik des Zylinders 9 druckentlastet wird und der Zylinder sich daher in seiner Lagerung 11 am Chassis 5 verschieben kann ähnlich dem Vorgang beim Ansenken der Ladebordwand 1 nach Auflage auf dem Boden 16. Die Blockierung des Hubarmes 2 erfolgt über einen Hebelarm 19, in dessen Bohrung ein am Chassis 5 angeordneter Verschiebebolzen 17 einrastet. Der Antrieb des Verschiebebolzens 17 kann mechanisch, hydraulisch, elektromagnetisch oder elektromechanisch erfolgen.

Die Erfindung ist nicht auf diese dargestellte Ausführungsform beschränkt, sondern es kann die Blockierung des Hubarmes 2 in seiner oberen Ladeposition auch durch andere an ihm direkt angreifende Festhaltemittel wie Klemmungen, Klinkengesperre od.dgl. erfolgen, wie man z.B. aus Fig.3 ersieht, wo zur Arretierung der Platte 1 in ihrer obersten Stellung am Hubarm 2 eine Öse 19 befestigt ist, die mit einer Bolzenverriegelung 17 am Chassis zusammenwirkt. Der Antriebsmechanismus mit Zylinder 9 ist jedoch nicht starr am Chassis 5 befestigt, sondern über einen in einem Langloch 11 verschiebbaren Bolzen 10 und einem Hebel 20 am Chassis gelagert, dessen anderer Hebelarm über eine Schubstange 8 mit der fahrzeugseitigen Lagerstelle 21 des Lenkerarmes 3 am Hebel 7 verbunden ist. Der Hebel 7 ist am Chassis mittels eines Rohres 22 gelagert, das koaxial über einem Rohr 6 liegt, welches mit dem Hebel 15 für die Hubbewegung verbunden wird und in dem auch der Hubarm 2 starr befestigt ist.

Um in der abgesenkten Stellung der Platte 1 eine Verschwenkung derselben zu ermöglichen, sind im Bereich des Endes des Lenkerarmes 3 Rollen 23 angeordnet, welche am Boden 16 abrollen, sodaß dort keine Hindernisse durch Reibung die Schwenkbewegung der Platte 1 behindern.

Wie man aus den Fig.4 und 5 ersehen kann, wird die Platte der Ladebordwand 1 von einem Hubarm 2 und einem Lenkerarm 3 getragen, welche Bestandteile eines Gelenkvierecks sind, an dem ein nichtdargestellter Hubzylinder angreift. Um die Ladebordwand in dieser obersten Stellung zu halten, wird sie mit dem Fahrzeug 5 über eine willkürlich einschaltbare Arretiervorrichtung verbunden, die darin besteht, daß an einer am Fahrzeug 5 quer angeordneten Welle 29, die in Lagern 30 gelagert ist, Haken 28 befestigt sind, die bei Verschwenkung der Welle 29 unter Bolzen 27 eingreifen, die mit Laschen 26 an den Hubarmen 2 angebracht sind. Da in der Regel zwei Hubarme vorhanden sind, sind auch zwei derartige Haken bzw. Bolzenlaschen auf jeder Seite des Fahrzeuges angeordnet. Die Betätigung erfolgt durch einen am Ende der Welle 29 angeordneten, nicht dargestellten Betätigungshebel. An Stelle eines Hebels können selbstverständlich auch ferngesteuerte automatische elektrische, hydraulische, mechanische oder pneumatische Antriebsmittel verwendet werden, die mit dem Hubmechanismus gekoppelt sind und daher selbsttätig

0006225

wirken, indem bei Erreichen der obersten Stellung die Verriegelung einrastet und vor dem Absenken wieder ausgerastet
wird.

Patentansprüche:

1. Hubeinrichtung insbesondere zum Laden von Fahrzeugen mit einer über ein elektromechanisch oder hydraulisch-pneumatisch betätigtes Gelenkviereck bewegbaren Lastaufnahmevorrichtung, insbesondere Platte, dadurch gekennzeichnet, daß die fahrzeugseitigen Lagerstellen (17) der Lenkerarme (3) der Gelenkvierecke (1,2,3,7) für die Schwenkbewegung der Platte (1) verschiebbar oder verschwenkbar ausgebildet sind.

2. Hubeinrichtung nach Anspruch 1, dadurch gekennzeichnet, daß die Lagerstelle (17) auf einem am Fahrzeug (5) gelagerten Hebel (4) liegt, der vom Antrieb (9) her verschwenkbar ist.

3. Hubeinrichtung nach Anspruch 1 oder 2, dadurch gekennzeichnet, daß der Hebel (4) mit dem Antrieb (9) über eine Stange (8) gekoppelt ist, wobei der Antrieb (9) beweglich, insbesondere längsverschieblich gelagert ist.

4. Hubeinrichtung nach einem der vorhergehenden Ansprüche, dadurch gekennzeichnet, daß der Antrieb (9) über einen im Langloch (11) geführten Bolzen (10) mit dem Fahrzeug (5) verbunden ist.

5. Hubeinrichtung nach einem der vorhergehenden Ansprüche, dadurch gekennzeichnet, daß der Antrieb (9) als hydraulischer Zylinder ausgebildet ist, dessen einseitig wirkender Kolben (12) über eine Feder (13) in die abgesenkte Stellung gedrückt ist.

6. Hubeinrichtung nach einem der vorhergehenden Ansprüche, dadurch gekennzeichnet, daß die Schwenkbewegung des Hubarmes (2) in der obersten Stellung durch eine mechanische, hydraulische oder elektromechanische Verrastung (17) blockierbar ist.

7. Hubeinrichtung nach Anspruch 6, dadurch gekennzeichnet, daß der Rastpunkt auf einem Hebelarm (19) liegt, der mit einem wagenseitig angeordneten Verschiebebolzen (17) zusammenwirkt.

8. Hubeinrichtung nach einem der vorhergehenden Ansprüche, dadurch gekennzeichnet, daß die fahrzeugseitige Lagerstelle (21) des Lenkerarmes (3) auf einem Hebel (7) liegt, der koaxial mit der fahrzeugseitigen Lagerstelle (6) des Hubarmes (2) gelagert ist (bei 22).

9. Hubeinrichtung nach Anspruch 8, dadurch gekennzeichnet, daß das Lager (22) in Form von koaxialen Torsionsrohren (6,22) ausgebildet ist, welche über Hebel (7,15) bzw. Schubstange (8) mit dem Antriebszylinder (9) bzw. dessen Kolbenstange (14) verbunden sind.

10. Hubeinrichtung nach Anspruch 8 oder 9, dadurch gekennzeichnet, daß der Antriebszylinder (9) auf einem Hebel (20) verschieblich gelagert ist, dessen anderer Hebelarm mit der fahrzeugseitigen Lagerstelle (21) des Lenkerarmes (3) verbunden ist.

11. Hubeinrichtung nach einem der vorhergehenden Ansprüche, dadurch gekennzeichnet, daß am anderen Ende des Lenkerarmes (3) oder in dessen Bereich eine Rolle (23) als bewegliche Abstützung der Platte (1) am Boden (16) vorgesehen ist.

12. Hubeinrichtung nach einem der vorhergehenden Ansprüche, dadurch gekennzeichnet, daß als mechanische Arretiervorrichtung in der obersten Ladestellung eine am Fahrzeug (5) angebrachte drehbare Welle (29) vorgesehen ist, welche Haken (28) aufweist, die in Ösen, Laschen oder hinter Vorsprünge (27) am Tragarm (2) oder an der Ladebordwand (1) angreifen und diese somit festhalten.

13. Hubeinrichtung nach Anspruch 12, dadurch gekennzeichnet, daß die Welle (29) in Lagern (30) unter dem Plateau gelagert ist und am Ende einen vorzugsweise verriegelbaren Betätigungshebel aufweist.

# FIG. 1

FIG. 2

0006225

# FIG. 3

17
6
22
7
2
1
19

5  20  9  11  10  14  8  15  21  3  16  23

0006225

Fig. 4

Fig. 5

Europäisches Patentamt

**EUROPÄISCHER RECHERCHENBERICHT**

Nummer der Anmeldung

EP 79 101 930.0

| | EINSCHLÄGIGE DOKUMENTE | | KLASSIFIKATION DER ANMELDUNG (int.Cl.3) |
|---|---|---|---|
| Kategorie | Kennzeichnung des Dokuments mit Angabe, soweit erforderlich, der maßgeblichen Teile | betrifft Anspruch | |
| X | DE - A - 2 352 991 (AVO INTERN TRANS-PORT) <br> * ganzes Dokument * <br> & FR- A - 2 198 853 <br> & US- A - 3 842 997 <br> -- | 1-3, 5,6, 12,13 | B 60 P 1/44 |
| X | DE - A - 2 253 654 (PRESTEL) <br> * ganzes Dokument * <br> -- | 1,2 | |
| X | DE - C - 825 803 (TOUSSAINT & HESS) <br> * ganzes Dokument * <br> -- | 8,9 | RECHERCHIERTE SACHGEBIETE (Int. Cl.3) |
| | DE - B - 1 029 739 (TOUSSAINT & HESS) <br> * Fig. 1;Position 17 * <br> -- | 6,7 | B 60 P 1/00 |
| | DE - A - 2 246 821 (DAUTEL KIPPER-BAU) <br> * Seiten 18, 19; Fig. 11 bis 14 * <br> -- | 7 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 07-09-1979 | LUDWIG |

EPA form 1503.1 06.78